# EUROPEAN PATENT APPLICATION

(11) **EP 4 242 243 A1**
(43) Date of publication of application: **13.09.2023**
(21) Application number: 22160945.6
(22) Date of filing: 08.03.2022
(51) Int. Cl.: C08F 265/06, C09D 5/00, C09D 151/00

(54) **WATERBORNE POLYMER COMPOSITION FOR WOOD APPLICATIONS**

(71) Applicant: Organik Kimya Sanayi Ve Tic. A.S., 34075 Istanbul (TR)
(72) Inventor: The designation of the inventor has not yet been filed
(74) Representative: Müller-Boré & Partner Patentanwälte PartG mbB

(57) **Abstract**

The present invention relates to a multistage radical emulsion polymerization process for producing a novel emulsion polymer composition, resulting with discrete particles dispersed in water having a star like structure. The novel emulsion polymer of the present invention imparts knot-sealing capability to coating compositions for wood applications. The present invention also relates to use of said emulsion polymer as an indoor and outdoor coating on wood substrates as well as to the multistage process of producing such a polymer.

## Description

The present invention relates to a multistage radical emulsion polymerization process for producing a novel emulsion polymer composition, resulting with discrete particles dispersed in water having a star like structure. The novel emulsion polymer of the present invention imparts knot-sealing capability to coating compositions for wood applications. The present invention also relates to use of said emulsion polymer as an indoor and outdoor coating on wood substrates as well as to the multistage process of producing such a polymer.

Emulsion polymerization is a well-known process for producing water based acrylic emulsions. Due to the increasing strictness of environmental regulations the importance of water-based emulsion polymers is increasing every day. These are dispersions of polymer particles in an aqueous medium and are used in a wide variety of applications such as adhesives, paints, coatings, paper coatings, paper impregnations, textile coatings, wood coatings, construction and building materials such as caulks and sealants, waterproofing roof coatings, cement additives and etc. The importance of emulsion polymerization process has grown significantly since the second half of the 20th century due to a wide variety of applications of water-based latexes. Additionally, the environmental regulations and awareness of the consumers have led to the replacement of solvent based polymers with water-based emulsions. This is true also for manufacturers in the wood industry, especially when considering the indoor applications. The coatings applied on wood enters the households through furnitures, doors, flooring and possibly as several other goods. But even if not used indoors most manufacturers are looking for wood coatings based on water based polymer emulsions, with the same or improved properties compared to solvent based coatings.

Wood contains organic extractives which are water soluble and migrate to the surface of the coatings. This is called extractive bleeding. There are so many types of extractives in wood by its nature. Organic extractives like tannins, flavonoids, terpenes and terpenoids, lignans, fats and waxes are chromophore substances which tend to migrate to surface of wood through knots. Knots are the joints of tree branches and they actually are imperfections contained in wooden material. These parts are highly concentrated in terms of polyphenols which can be differentiated as aromatic and aliphatic, and in terms of resins. The discoloration as a result of extractive bleeding occurs as a result of migration of water-soluble organic extractives in wood. This migration causes the color change like yellowish or greenish of the coating. Stilbenes, tannins and flavonoids change colour with light and air. Knots are mainly responsible for bleeding of the extractives, which is not desired by the consumers. The problem of knot bleeding may be a challenging task to solve, especially when considering that the wood may continue to bleed to the surface of a knot taking months or even years to result with a stain on the wooden material.

In the state-of-the-art solvent-borne coating systems, inorganic chelating metals (Zn, Al, Zr) or epoxy binders are mainly used to block this color change and prevent knot-bleeding on wood. These systems are not environment friendly and additionally could cause health problems during manufacture and/ or during use. Besides some of these methods are restricted due to environmental regulations.

Unlike solution polymers, emulsion polymers are produced in a heterogeneous, 2 phase system. Emulsion polymerization is a type of free radical polymerization process which most of the time starts with an emulsion incorporating water, at least one monomer and a surfactant. The resulting polymers produced in such a way are actually polymer particles dispersed in the water phase. In this complicated process surfactants are of paramount importance in order to stabilise the polymer particles, both during and after polymerization. During the polymerization process, surfactants provide sites for particle nucleation, controls the particle size and provides colloidal stability as the particles are formed. Thus, besides solubilizing hydrophobic monomers, surfactants in conventional emulsion polymerization process have various functions such as affecting the number and size of the emulsion particles formed, providing stability, as particles continue to grow in the dispersion and during post-polymerization processing. Examples of typical conventional surfactants generally used in emulsion polymerization are anionic surfactants such as fatty acid soaps, alkyl carboxylates, alkyl sulfates and alkyl sulfonates, non-ionic surfactants such as ethoxylated alkylphenol or fatty acids and cationic surfactants such as amines, nitriles and etc. US2019144702A discloses a process for the preparation of aqueous dispersions of anionic polymers comprising both amine and acid functionality useful as coatings on wood, metal and other surfaces. The coating composition is disclosed to be particularly suitable for use in coating compositions and coatings providing anti-bleed or antimicrobial properties. It is produced in a 2-stage polymerization process wherein the alkali soluble resin produced in the first stage is anionic. The resulting coating is a cationic polymer.

According to alkali soluble resin (ASR) supported method for producing aqueous dispersions, oligomer chains give a stabilization system which might be affected by lots of parameters such as CTA (chain transfer agents), pH range, acid type and etc. In addition, ASR technology is limited with a certain ratio of the ASR resin and the polymeric part. Thus, ASR supported technology doesn't have the flexibility with ASR/polymer ratios.

Furthermore in alkali soluble resin (ASR) supported polymerization technique, the first step is to produce an ASR dispersion polymer that, typically contains 10% by weight acid monomer or more. Subsequently, this ASR necessarily has to be neutralized (=dissolved) before the next step of making the polymer can be carried out. The polymer is typically made as a redox batch reaction because the pH is unfavorable.

Thus, considering the above mentioned and possibly other problems with ASR (alkali soluble resin) supported polymers produced with alkali soluble resins, there is at least a need for a less risky process in terms of processability.

In order to seal the knots and prevent the knot bleeding problem in wood coating applications several other methods have also been used. In the prior art method of cationic binders, a cationic low molecular weight oligomer is prepared by solution polymerization. This oligomer is dispersed in water by treating it with formic acid/water (cationic) and then it is used in emulsion polymerization. Cationic emulsion polymers could be an alternative route for the solution to the problem of knot bleeding, but this route has some difficulties and disadvantages. Cationic polymers cause difficulties in formulating a coating composition due to their cationic charges against anionic charges of other significant ingredients in the coating formulation. Since not completely eliminating solution polymerization and because of formulation difficulty, there has been a need for an alternative method.

US 7935757B2 discloses a process for making a cationic vinyl oligomer composition. The disclosed process comprises 2 different polymerization steps. First step relates to solution polymerization in order to prepare an oligomer. Then this oligomer is rendered cationic and used in a 2nd step of emulsion polymerization. The resulting product is disclosed to be beneficial in terms of knot-sealing. Iso-propyl alcohol is used as a solvent and the end product contains 8% of IPA. However, besides the solvents, cationic polymers cause difficulties in formulating a coating composition due to their cationic charges against anionic charges of other significant ingredients in the coating formulation.

CN110317488 A discloses an anti color-bleeding auxiliary agent for a water-based wood coating and preparation method of anti-color bleeding auxiliary agent.

Coating and paint producers require anionic water-based emulsion polymers in their formulation. Therefore, there is also a need in the state of the art to develop anionic water-borne systems for preventing knot-bleeding, without sacrificing the same properties.

Thus, it is an object of the present invention to provide a water based anionic emulsion polymer to be used in wood applications that prevents knot bleeding at least to the same degree, but preferably in an improved way compared to prior art solution-based systems.

The present invention provides a water-borne system that could prevent knot-bleeding and solve the discoloration problems of the coating applied on wood. The coating system of the present invention is water-based and therefore it does not contain any solvents. The novel emulsion polymer composition of the present invention is obtained by radical emulsion polymerization in water, resulting with discrete dispersed particles having a star like structure and imparts knot-sealing capability to coating compositions for wood applications.

Star shaped polymers have been firstly disclosed in 1940s as star shaped polyamides. Another disclosure was in 1960s with the first study demonstrating a method to create well defined star shaped polymers through living anionic polymerization. The at least three arms of star shaped polymers may be chemically identical or different. In addition, individual arms may be composed of multiple polymers, resulting in star-block polymers or star copolymers. The unique properties of star-shaped polymers come from their chemical structure as well as the length and number of their arms. Typical star shaped polymers in the state of the art are a class of branched polymers with a structure of at least three linear chains connected to a central core. These are generally used in pharmaceutical industry and typically the linear chains extending from the core are much bigger than the core.

US 9,399,694 B2 discloses a polymer composition comprising one or more star macromolecules formed by an arm-first living controlled radical polymerization and having a core and a plurality of polymeric arms, wherein at least one arm of the plurality of polymeric arms is a hydrophilic arm, and at least one arm of the plurality of arms is a copolymeric arm. The copolymeric arm has different segments in itself in terms of hydrophilicity and the hydrophilic polymeric arm is shorter than the copolymer arm.

Thus it is already known in the state of the art to have different polymeric arms in order to impart different properties to said star shaped polymers. However, it has never been disclosed to modify the wet and dry properties of dispersion polymers, by exploiting the ability of dispersed polymer particles' outer layer to swell or dissolve in water under appropriate conditions so that after swelling or dissolving, star shaped particles/ star like particles are formed in the dispersion.

Actually the star like particles of the present invention are different than what is generally understood from star shaped particles in the prior art. Thus star shaped particles of the prior art only serve as an inspiration to name the novel particles of the present invention as star like particles, as used herein and throughout the application.

Therefore, the object of the present invention is to use the ability of the dispersed polymer particles' outer layer to swell or dissolve in water under the appropriate conditions of pH, temperature and/or the presence of swelling agents capable of producing that effect on the polymeric outer layer, while the core of the particle remains largely unaffected by that swelling/dissolving process.

Accordingly, the present invention is as defined in the accompanying claims.

Thus, the emulsion polymers of the present invention are produced with a novel method to produce the star like particles. Said method is a special version of emulsion polymerization technique. It does not contain any solvents therefore it is environmentally friendly. The product is anionic and is beneficial against knot-bleeding of pine wood when it is formulated as primer.

The discrete polymer particles dispersed in water are called star like particles according to the present invention, inspired by the star shaped polymers of the prior art. However it has to be made clear that the star like polymer particles of the present invention have a completely different structure than what is generally understood from the star shaped polymers of the prior art.

The dispersed polymer particles obtained by the present invention are spherical and comprise a core and an outer layer. Unlike typical star shaped polymers, they don't have long polymer chains extending from the core. However, the outer layer has the ability to swell under appropriate conditions in order to form a star shape like particle. The swelling of the outer layer does not need to be symmetrical or proportional. The outer layer does not necessarily cover completely the core, so the swelling of the outer layer may lead to a globular pattern. Thus, the swelling does not result with just a bigger particle and forms a shape like a star shaped particle.

The concept of dissolving is clear, well defined in literature and even close to everybody's experience. When a low molecular weight solute such as sugar or salt is added to water, the dissolution process takes place almost immediately. The molecules leave the crystal lattice progressively, disappear into the water, and form a stable, clear solution.

On the other hand, the concept of polymer swelling and dissolving with all its almost infinite intermediate states, amounts up to a much more complex process. Although those concepts are familiar to the person skilled in the art, it has taken a lot of specific work to understand this phenomenon. Polymer molecules, especially those of high molecular weight, behave very differently than sugar or salt. They constitute long chains with a large number of segments, forming tightly folded coils which are even entangled to each other. Numerous cohesive and attractive both intra and intermolecular forces hold these coils together. Based on these features, one may expect noticeable differences in the dissolution behavior shown by polymers. Due to their size, coiled shape and the attraction forces between them, polymer molecules become dissolved quite slowly than low molecular weight molecules. Polymer swelling always precedes dissolution and dissolution only occurs if swelling has taken place, previously. Billmeyer Jr. (1975), for instance, points out that there are two stages involved in this process: in the first place, the polymer undergoes swelling and next the dissolution step itself takes place.

Polymer dissolution behavior differs from dissolution of non-polymeric materials "which dissolve at once". The dissolution of a polymer into a solvent involves two transport processes, namely solvent diffusion and chain disentanglement. When an uncrosslinked, amorphous, glassy polymer is in contact with a thermodynamically compatible solvent (solubility parameters will indicate that), the solvent will diffuse into the matrix of the polymer. Due to plasticization of the polymer by the solvent, a gel-like swollen layer is formed along with two separate interfaces and this stage is described as swelling. After time elapses (an induction time), the polymer enters the second stage and dissolves either entirely or partially or only dispersion of the macro molecules forms without actual dissolving.

When a polymer is added to a given solvent, attraction as well as dispersion forces begin acting between its segments, according to their polarity, chemical characteristics and solubility parameter. If the polymer-solvent interactions are higher than the polymer-polymer attraction forces, the chain segment start to absorb solvent molecules, increasing the volume of the polymer matrix (swelling) and loosening out from their coiled shape.

In polymer dissolution, swelling is the first step in the interaction between liquid molecules and polymeric network, which is usually followed by solvation of polymer chains. The immersion of cross-linked polymers in solvents does not lead to their dissolution because of their chemically bonded hydrocarbon chains; nonetheless, these links do not prevent cross-linked polymers from swelling. (Journal of Thermal Analysis and Calorimetry volume 130, pages 85-93 (2017)). A short and sharp definition of swelling is given by Gugliuzza and Drioli (2007): Swelling of a polymeric material is the penetration of a solvent into the polymer network that causes an abrupt volume change.

As a conclusion, to dissolve a polymer is a process that requires swelling, but that swelling does not necessarily leads to a complete dissolution. A long continuum of intermediate states that starts with swelling, may stop there (a significant volume increase) or continue to stages of higher volume, partial solvation, total solvation of the lower molecular weight (MW) fractions present or of the more polar ones, till the complete dissolution.

For the purpose of the present invention, from different stages of swelling up to the different degrees of dissolution, as expressed in the previous paragraph, should be understood as the process undergone by the outer layer of the polymer particle while the main part (core) of that polymeric particle remains substantially unaffected by the swelling process.

Since the chemical nature of the swellable/soluble outer layer (SOL) is different than that of the main polymeric part, the physical and chemical properties of the resulting polymer can be manipulated at two different levels or domains to obtain new features and properties from compositions that, taken in their entirety, do not differ much from the state of the art compositions.

According to the present invention, the main polymeric composition (the composition of the core) has to differ from the one constituting the outer layer, at least, in the ability to swell/dissolve under the conditions the polymeric outer layer does. Naturally, the main polymeric part (the core) can also, eventually, be swollen or dissolved using the right means and conditions but according to the present invention, those means and conditions are not present in any significant way at the moment the swelling/dissolving process of the outer layer takes place.

The outer layer swelling/dissolving conditions can exert some influence on the insoluble main polymeric part which constitutes the core of the particle. For instance, if a radical pH change or high temperatures were needed, the main polymeric part (the core) can for instance moderately expand, be neutralized but without affecting in any significant way its chemical structure, physical state and morphology. It is the outer layer that results dramatically changed under these appropriate conditions. Either it becomes definitely water-soluble or it swells to such an extent that the resulting size and morphology substantially differ from those prior to the application of these conditions. Thus, even if there is any change in the core of the particle due to swelling/dissolving conditions of the outer layer, this change is not significant and is negligible especially when compared with the change in swellable/soluble outer layer.

According to an embodiment of the present invention, under the swelling/dissolving conditions of the outer layer, the change in the core is at least 10 times less than the change that occurs in the swellable/soluble outer layer.

The consequences of the process according to the present invention, as described herein is beneficial when it is used in a coating composition, preferably in wood coatings for knot sealing. Beyond the particle shape, the wide range of compositional variations for the main polymeric part as the core and the extent of swelling/dissolving the formulator may decide for a particular swellable/soluble outer layer, together make this technology a powerful tool to modify many properties as well as to achieve new combinations of properties.

Methods for preparation of the water insoluble polymer parts as the core as well as the swellable/soluble outer layer (SOL) suitable for the compositions of the present invention are not specifically limited among the state-of-the-art processes. The preferred method is the emulsion polymerization process. The practice of emulsion polymerization is well known and discussed in detail in the literature, for example, in D. C. Blackley, Emulsion Polymerization (Wiley, 1975), and Lovell & El-Aasser (Wiley, 1997). The polymerization temperature is typically from 50 ºC to 95 ºC and may also involve use of dispersing agents, initiators, accelerators, emulsifiers, chain transfer agents, etc. As will be readily understood by persons of ordinary skill, dispersing agents and emulsifiers include anionic, cationic or non-ionic agents, polymerization initiators may be of the free radical type, such as ammonium, sodium or potassium persulphates as examples of the inorganic type or organic peroxides such as ter-butyl hydroxy peroxide (t-BHP) and benzoyl peroxide or azo derivatives such as ACVA (4,4'-azobis-4-cyanopentanoic acid). The initiators may be used alone or with an accelerator, such as potassium meta-bisulphite, sodium thiosulphate and sulfoxilates (Rongalithe C^{®}), transition metals salts (Fe++, Cu+). Examples of suitable emulsifiers include, for example, alkaline metal and ammonium salts of alkyl, aryl, alkyl-aryl and aralkyl sulphonates, sulphates, polyether sulphates and alkoxylated derivatives of fatty acids, esters, alcohols, amines, amides and alkylphenols. Chain transfer agents, including mercaptans, polymercaptans and poly-halogen compounds may be used in order to control molecular weight.

Suitable water insoluble polymer compositions as the main polymeric part (the core) may contain, as polymerized units, from 0 to 4.0% by weight based on the total monomer composition of the main polymeric part, of one or more monoethylenically unsaturated monomers containing an acidic functional group selected from one or more of carboxylic, sulfonic and phosphonic groups. For example, suitable carboxylic acid monomers include, without limitation, monoethylenically unsaturated (C3-C9) carboxylic acid monomers, such as unsaturated monocarboxylic and dicarboxylic acid monomers. For example, unsaturated monocarboxylic acids include acrylic acid (AA), methacrylic acid (MAA), beta-dimethylacrylic acid, ethylidineacetic acid, propylidineacetic acid, crotonic acid, acryloxypropionic acid and alkali and metal salts thereof. Suitable unsaturated dicarboxylic acid monomers include, for example, maleic acid, maleic anhydride, fumaric acid, itaconic acid, citraconic acid, mesaconic acid, methylenemalonic acid and alkali and metal salts thereof.

Additional suitable monoethylenically unsaturated monomers containing sulfonic acid or phosphonic groups include, for example, 2-acrylamido-2-methyl-1-propane-sulfonic acid, 2-methacrylamido-2-methyl-1-propanesulfonic acid, 3-methacryl-amido-2-hydroxypropanesulfonic acid, allylsulfonic acid, methallylsulfonic acid, allyloxybenzenesulfonic acid, methallyloxybenzenesulfonic acid, 2-hydroxy-3-(2-propenyloxy)propanesulfonic acid, 2-methyl-2-propene-1-sulfonic acid, styrenesulfonic acid, vinylsulfonic acid, 2-sulphoethyl methacrylate, 3-sulfopropyl acrylate, 3-sulfopropyl methacrylate, sulfomethyl acrylamide, sulfomethyl methacrylamide and phosphoethyl methacrylate.

The swellable/soluble outer layer comprises at least 7% by weight of acid functional monomer selected from the list of monomers as mentioned above or any other acid functional monomer. The rest of the monomers for the main polymeric part (the core) may be any kind of monomers. The rest of the monomers for the swellable/soluble outer layer (SOL) may be any kind of monomers capable of copolymerizing with the acid functional monomer(s) that constitute the 7% or more of the outer layer.

Examples of said monomers to be used for the swellable/soluble outer layer (SOL) and also in the main polymeric part, are typically one or more monoethylenically unsaturated monomers as mentioned below:
The one or more monoethylenically unsaturated monomers may be selected from (C1-C20)alkyl (meth)acrylate ester monomers, such as, without limitation, methyl acrylate, ethyl acrylate, propyl acrylate, isopropyl acrylate, butyl acrylate, isobutyl acrylate, secondary butyl acrylate, tertiary-butyl acrylate, methyl methacrylate, ethyl methacrylate, propyl methacrylate, isopropyl methacrylate, cyclopropyl, methacrylate, butyl methacrylate and isobutyl methacrylate, hexyl and cyclohexyl 30 methacrylate, cyclohexyl acrylate, isobornyl methacrylate, 2-ethylhexyl acrylate (EHA), 2-ethylhexyl methacrylate, octyl (meth)acrylate, decyl (meth)acrylate, isodecyl (meth)acrylate, undecyl (meth)acrylate, dodecyl (meth)acrylate (also known as lauryl (meth)acrylate), tridecyl (meth)acrylate, tetradecyl (meth)acrylate (also known as myristyl (meth)acrylate), pentadecyl (meth)acrylate, hexadecyl (meth)acrylate (also known as cetyl (meth)acrylate), heptadecyl (meth)acrylate, octadecyl (meth)acrylate (also known as stearyl (meth)acrylate), nonadecyl (meth)acrylate, isodecyl (meth)acrylate and combinations thereof. Typically, the (C1-C20)alkyl (meth)acrylate esters are (C1-C8)alkyl (meth)acrylate esters and preferably (C1-C8)alkyl acrylate esters; more preferably, the (C1-C20)alkyl (meth)acrylate esters are selected from methyl acrylate, ethyl acrylate, butyl acrylate and 2-ethylhexyl acrylate; most preferably, the acrylate esters are selected from butyl acrylate, 2-ethylhexyl acrylate and methyl methacrylate.

The one or more monoethylenically unsaturated monomers used to prepare the water insoluble polymer binders as the main polymeric part (the core) and the soluble/swellable outer layer (SOL), may comprise one or more vinylaromatic monomers, such as, for example, styrene, alpha-methyl styrene and substituted styrenes, such as vinyl toluene, 2-bromostyrene, 4-chlorostyrene, 2-methoxystyrene, 4-methoxystyrene, alpha-cyanostyrene, allyl phenyl ether and allyl tolyl ether, vinyl ester of Versatic acids.

It is also possible for the water insoluble polymer compositions as the main polymeric part (the core) to comprise, as polymerized units, 0.1 to 50%, preferably 0.1 to 25% by weight based on the total amount of monomers of the core of one or more other copolymerizable monomers. Suitable other copolymerizable monomers include, for example, butadiene, acrylonitrile, methacrylonitrile, crotononitrile, alpha-chloroacrylonitrile, ethyl vinyl ether, isopropyl vinyl ether, isobutyl vinyl ether, butyl vinyl ether, diethylene glycol vinyl ether, decyl vinyl ether, ethylene, methyl vinyl thioether and propyl vinyl thioether, esters of vinyl alcohol, amides of ethylenically unsaturated (C3-C6)carboxylic acids that are substituted at the nitrogen by one or two (C1-C4)alkyl groups such as, acrylamide, methacrylamide and N-methylol (meth)acryl-amide.

Additionally, the polymer compositions of main polymeric part and the SOL may comprise from 0.1 to 20% by weight of one or more monoethylenically unsaturated monomers. For example, one or more (meth)acrylic monomers containing one or more pendant reactive functional groups selected from hydroxy, thiol and amino groups. Suitable hydroxy-functional (meth)acrylic monomers include, for example, hydroxyl(C1- C4)alkyl(meth)acrylates, such as hydroxyethyl methacrylate, hydroxyethyl acrylate, hydroxypropyl methacrylate and hydroxypropyl acrylate. Suitable amino-functional (meth)acrylic monomers include, for example, dimethylaminopropyl methacrylamide, dimethylaminopropyl acrylamide, dimethylaminoethyl methacrylate, dimethylaminoethyl acrylate, dimethyl-aminopropyl methacrylate and dimethylaminopropyl acrylate. Suitable thiol-functional (meth)acrylic monomers include, for example, 2-mercaptopropyl methacrylate.

The main polymeric part (the core) may have any composition known in the art having a glass transition temperature (Tg) of at least 0 °C. Basically, all kind of monomer combinations suitable for free radical polymerization or free radical emulsion polymerization are possible. And it does not need to be homogeneous. Actually, all degrees of heterogeneity are allowed, any kind of functionality is possible, it can be single or multi-staged, core-shell, pre-crosslinked or not, cross-linkable or not, hard or soft, mono- or polymodal. The requirement according to the present invention is that whatever polymer it is, it does not dissolve, neither significantly swells, under the conditions the swellable/soluble outer layer (SOL) does.

The swellable/soluble outer layer (SOL) is a composition polymerized onto the main polymer particles' surface, capable of becoming water soluble (or swellable) under certain conditions (pH, temperature and addition of swelling agents) and those conditions are applied after the SOL composition has been polymerized. Thus according to the present invention the SOL polymer composition is not water soluble/swellable unless the aforesaid conditions are applied. The glass transition temperature (Tg) of the swellable/soluble outer layer (SOL) is at least 20 °C, more preferably at least 40 °C.

In many cases, although it is easy to understand for anyone knowledgeable in the art, is not easy to see the transition from the insoluble to the solubilized state of the swellable/soluble outer layer (SOL) and also from the unswollen to the swollen state of the SOL. For the scope of the present application, a suitable SOL composition for the present invention, will be that polymer composition which, once polymerized in water as a single polymer without the core part of the present invention, at customary solids levels, with the help of surfactants, seeds or other adjuvants, produces a milky polymer dispersion that, under the aforesaid conditions, dramatically swells (the polymer undergoes an abrupt change in volume) or even dissolves in the water medium, typically becoming more transparent and producing a remarkable increase in viscosity.

The morphology of the resulting particle after the swellable/soluble outer layer (SOL) dissolution, is completely different than that of the well-known in the art colloidally-stabilized polymer particles. Contrary to the customary way of producing colloidally-stabilized dispersion polymers in water, according to the present invention the colloid (the swollen/solubilized SOL after applying certain conditions) is created after the polymerization process has been completed, whereas in the prior art process for producing colloidally-stabilized dispersion polymers, the colloid, polyvinyl alcohol (PVOH), hydroxy ethyl cellulose (HEC), polyvinyl pyrrolidone (PVP), carboxy methyl cellulose (CMC), starch has to be present at the start and/or during the polymerization process. Thus the star like polymers produced according to the present invention are very different.

Similarly, when the process for producing the novel star like polymers according to the present invention is compared with the well-known ASR-supported polymerization, the ASR (alkali-soluble-resin) has to be produced prior to the main polymerization and be present at the start of that main polymerization process.

Common to these aforementioned prior art processes, as it is well known in the art, the colloid has to be present preferably at the start in order to increase as much as possible the chances (the statistical probability) of a bonding interaction (grafting) between colloid and growing polymer, so the former can act as the stabilizing agent of the latter. This is the opposite in the process of the present invention.

Due to the fact that the grafting process in the conventional colloidal and ASR-supported classical processes is a probabilistic effect that depends on the type of colloid or ASR (alkali soluble resin) with regard to the polymer they intend to stabilize, as well as on the temperature, pH, amount of catalyst, chain-transfer-agent, etc., even under the most favorable conditions, the expected result is that a certain percentage of the colloid will be linked to the subsequently created polymer particle with the rest remaining dissolved in the water phase. In the process for producing the star shaped polymers of the present invention, the "colloid" (the swollen/solubilized SOL after applying certain conditions) remains covalently linked to the previously created polymer particle.

Other factors that are of primary importance for the classical grafting process above described (such as conventional colloid or ASR supported polymerization processes), like parameters of solubility, viscosity, polarity, ratio colloid/polymer or those parameters regarding the main polymerization reaction itself, such as type/amount of catalyst, reaction temperature, in-process viscosity, are a much lesser problem for the process according to the present invention since the "colloid" (the swollen/solubilized outer layer after applying certain conditions) only shows-up after the whole polymeric process has taken place and the swelling conditions have been applied.

The swellable/soluble outer layer (SOL) composition of the present invention, like the main polymeric parts, may contain all kind of functional monomers and may contain crosslinkable moieties or be pre-crosslinked without departing from the scope of the present invention. Also, like the main polymeric composition, it can be single or multistage. And those stages may differ compositionally too. The only requisite according to the present invention is that, whatever the composition of the SOL, given the appropriate conditions, it will undergo swelling/dissolving whereas the main polymeric particle as the core will not.

The main polymeric part (core) and/or the swellable outer layer comprises preferably from 0,1 to 10% by weight of crosslinkers, based on the total amount of monomers selected from the list of one or more of polyunsaturated monomers, polyfunctional monomers, dicarbonyl monomers, carbodiimide monomers or in general monomers containing moities that can be crosslinked, preferably dicarbonyl-functional monomers and more preferably diacetone acrylamide.

In a preferred embodiment, the condition to apply in order to make the swellable/soluble outer layer to swell or dissolve, is a change in the pH. This mechanism works as well in an anionic environment as in a cationic one. Since most uses of water-dispersed polymers occur in anionic/non-ionic environments, embodiments of the present invention are directed to anionic/non-ionic environments.

In this preferred embodiment, a monomer blend is being polymerized into a system of discrete particles dispersed in water. At the end of that monomer feed, a new (second) monomer blend is polymerized (in order to form the swellable/soluble outer layer) whereby that new monomer blend contains a co-polymerizable acid monomer in sufficient amount versus the total of that second monomer feed content, that would make the polymer layer resulting from the polymerization of that second feed water-soluble/swellable, if sufficient amount of a base were added. The polymerization process is carried out within a pH range where the polymer of the secondary monomer blend is not significantly swellable/soluble. When the polymerization process is finished, a swelling agent (a base, like ammonia, amines, caustic soda, and the like) is added in sufficient amount as to raise the pH and bring the swellable/soluble outer layer (SOL) to the desired degree of swelling or dissolution.

Thus, according to the preferred embodiment of the present invention, it suffices that, provided the conditions (amount of base, temperature, solvents, agitation) to achieve the desired level of swelling/dissolving of the outer layer, the main polymeric parts as the core do not swell or dissolve in any significant way. Even if there is any slight swelling or dissolution of the core, this is negligible compared to the swellable/soluble outer layer.

The following examples will illustrate some of the main aspects of the invention but by no means they constitute the entire scope, neither they imply any restriction to it.

### Comparative Example P-0:

A 2-liter round-bottomed flask is equipped with paddle stirrer, thermometer, nitrogen inlet and reflux condenser. To 220 grams of deionized water 5 gr of a 20% solution of the ammonium salt of a phosphate ester surfactant (Rhodafac RS710^{®}) are added and this solution is heated to 82ºC in the flask. There is added 50 grams of a catalyst solution containing 3% ammonium persulfate. This is immediately followed by 25 grams of a monomer emulsion composed of 180g of deionized water, 16 grams of a 20% solution of the ammonium salt of a phosphate ester surfactant (Rhodafac RS710^{®}), 15 grams of methacrylic acid (MAA), 230g of methyl methacrylate (MMA) and 155g of butyl acrylate (BA), 0.6g of Mercapto Propionic Acid, 1.2g of n-Dodecyl Mercaptane. Upon the addition of the 25g, temperature rises to 84-86ºC and the remaining monomer emulsion is metered in at a rate of 5 grams/minutes. The reaction mixture is held at a temperature range of 84-86ºC. 15-20 min before the monomer emulsion is finished, the temperature inside the reactor is let to increase steadily up to 86ºC. Upon termination of the monomer emulsion addition, the reactor is kept at that temperature for about 30 minutes more and then cooled down to 70-75ºC. There, a parallel addition of 8 g of a 4% strength t-BHP solution and 8g of a similar strength solution of Bruggolite^{®} SFF6 is performed at a simultaneous metering rate of 0.5g/min. Upon termination of the redox reaction, the reactor is held at same temperature for 15 min more, followed by a neutralization step consisting of the addition of 15g of a 10% strength ammonia solution at a approx. rate of 1 g/min. After cooling down, and with the addition of a few drops of biocide and a defoamer, the reactor content is discharged and filtered to remove any coagulum formed. The final latex product had a 44.96% solids content, a pH of 8.1, a Brookfield viscosity of 100 mPa.s and a particle size (PS) of 160nm.

### Comparative Example P-1

The same procedure as in P-0 but where monomer emulsion composed of 180g of deionized water, 16 grams of a 20% solution of the ammonium salt of a phosphate ester surfactant (Rhodafac RS7100), 15 g of 1,4-Butanediol dimethacrylate monomer, 15 grams of methacrylic acid (MAA), 230g of methyl methacrylate (MMA) and 155g of butyl acrylate (BA), 0.6g of Mercapto Propionic Acid, 1.2g of n-Dodecyl Mercaptane. The final latex product had a 46.27% solids content, a pH of 8.1, a Brookfield viscosity of 140 mPa.s and a particle size (PS) of 162nm.

### Comparative Example P-2

The same procedure as in P-1 but where two monomer emulsions are prepared, a first monomer emulsion identical to the one in P-1 herein amounting to 70% of the total monomer emulsion, and a second monomer emulsion identical to the one in P-1 herein amounting to 30%. The final latex product had a 46.27% solids content, a pH of 8.1, a Brookfield viscosity of 150 mPa.s and a particle size (PS) of 159nm.

### Inventive Example P-3

The same procedure as in P-2 where two monomer emulsions are prepared; a first monomer emulsion amounting to 70% of the total monomer emulsion and a second monomer emulsion amounting to 30%. The two monomer emulsions herein are prepared as below:
70% of the monomer emulsion composed of 126g of deionized water, 11.2 grams of a 20% solution of the ammonium salt of a phosphate ester surfactant (Rhodafac RS710^{®}), 10.5 g of 1,4-Butanediol dimethacrylate, 6.5grams of methacrylic acid (MAA), 165g of methyl methacrylate (MMA) and 108.5g of butyl acrylate (BA), 0.42g of Mercapto Propionic Acid, 0.84g of n-Dodecyl Mercaptane. 30% of the monomer emulsion composed of 54g of deionized water, 4.5 grams of a 20% solution of the ammonium salt of a phosphate ester surfactant (Rhodafac RS710^{®}), 4.8 g of 1,4-Butanediol dimethacrylate, 8.5grams of methacrylic acid (MAA), 65g of methyl methacrylate (MMA) and 46.5g of butyl acrylate (BA), 0.18g of Mercapto Propionic Acid, 0.36g of n-Dodecyl Mercaptane. Unlike other examples, neutralization step consisting of the addition of 20g of a 10% strength ammonia solution at a approx. rate of 1 g/min. The final latex product had a 46.1 % solids content, a pH of 8.6, a Brookfield viscosity of 190 mPa.s and a particle size (PS) of 182nm.

### Inventive Example P-4

The same procedure as in P-3 where two monomer emulsions are prepared including diacetone acrylamide instead of 1,4-Butanediol dimethacrylate for both in the same amount. After polymerization, 51 g of 15% solution of Adipic acid dihydrazide is added as post-additive. The final latex product had a 44.45% solids content, a pH of 8.6, a Brookfield viscosity of 175 mPa.s and a particle size (PS) of 185nm.

### Inventive Example P-5

The same procedure as in P-3 where two monomer emulsions are prepared excluding 1,4-Butanediol dimethacrylate for both. The final latex product had a 45.19% solids content, a pH of 8.7, a Brookfield viscosity of 175 mPa.s and a particle size (PS) of 180nm.

**Table 1**

| **Trial No** | **P-0** | **P-1** | **P-2** | **P-3** | **P-4** | **P-5** |
|---|---|---|---|---|---|---|
| **Solid (%)** | 44.96 | 46.27 | 46.25 | 46.08 | 44.45 | 45.19 |
| **pH** | 8.1 | 8.1 | 8.1 | 8.6 | 8.6 | 8.7 |
| **Viscosity (mPa.s)** | 100 | 140 | 150 | 190 | 175 | 180 |
| **Particle size (nm)** | 160 | 162 | 159 | 182 | 185 | 180 |
| **Tg (°C)** | 36 | 36 | 36 | 36 | 36 | 36 |
| **MFFT (°C)** | 35 | 36 | 36 | 34 | 34 | 35 |
| **Monomer ratio by weight % of core polymer vs. SOL** | Comparative 100/0 | 100/0 | 70/30 | 70/30 | 70/30 | 70/30 |
| **Crosslinker amount (weight% on total monomer)** | 0 | 3.75 | 3.75 | 3.75 | 3.75 | 0 |
| ***MAA weight% based on total monomer in core / MAA weight% based on total monomer in SOL** | 3.75 / - | 3.75 / - | 3.75/3.75 | 2.3/7 | 2.3/7 | 2.3/7 |

| | | | | | | |
|---|---|---|---|---|---|---|
| *MAA = methacrylic acid | | | | | | |

Application Performance Tests:
Dispersions (Emulsions) from examples were formulated into pigmented coatings using the ingredients given in Table 2. First a mill base was prepared by high shear mixing. In the let-down stage emulsion together with butyl glycol was added.

**Table 2**

| | **Component** | **Function** | |
|---|---|---|---|
| **Millbase** | Water | Solvent | 92.3 |
| | Natrosol 250 HR | Thickener | 1.6 |
| | Ammonia | Neutralizer | 0.4 |
| | Tegofoamex 1488 | Defoamer | 0.4 |
| | Dispersant ASP 40 | Neutralizer | 1.1 |
| | Titanium dioxide | Pigment | 59.0 |
| | 2 µm Calcite | Filler | 77.7 |
| | Talc | Filler | 38.8 |
| **Let-down** | Dispersion from examples | Resin | 634.2 |
| | Butyl glycol | Solvent | 31.7 |
| | Water | Solvent | 53.7 |
| | Tego Airex 902 W | Defoamer | 1.2 |
| | Tafigel PUR 44 | Thickener | 2.7 |

**Table 3**

| Trial No | P-0 | P-1 | P-2 | P-3 | P-4 | P-5 |
|---|---|---|---|---|---|---|
| ΔE | 10.4 | 7 | 6.3 | 0.7 | 0.4 | 1.8 |
| Gloss 20°/60° /85° (G.U.) | 2.1 / 13.2 / 28 | 2.3 / 13 / 33.1 | 2.2 / 13.4 / 33.3 | 2.4 / 15.9 / 36.1 | 2.4 / 16.5 / 36.2 | 2.3 / 16.8 / 36.3 |
| Hiding Power (%) | 83.2 | 84.3 | 83.7 | 85 | 84.2 | 84.9 |

The properties of resulting emulsion polymers are shown in Table 1. Said resulting polymers from examples P-0 to P-5 were formulated into paint formulation according to Table 2 and results given in Table 3. The formulations were applied as described above and evaluated.

Table 3 shows the results regarding the knot-bleeding performance. If the discoloration of the knots, ΔE, is lower than 1, it means primer blocks pine knot bleeding.

### Determination of Gloss

Gloss of paints were measured by using BYK micro-TRI-gloss. Films were applied with a wet film thickness of 100 microns on glass and drying the film at 23° C./50% RH for 7 days.

### Determination of Hiding power

Hiding power of paints were measured by X-Rite Ci60 Spectrophotometer. Films were applied with a wet film thickness of 200 microns on opacity chart and drying at film at 23° C./50% RH for 7 days.

It is obvious that the increased particle size (PS) values compared with the comparative P-0 is due to the swollen swellable/soluble outer layer (SOL).

The particle sizes are measured with the instrument Malvern Zetasizer Nano-S. The sample to be analysed is diluted in 10 mM NaCl aqueous (with demineralized water) solution. 1-2 drops of sample is added to 50 mL 10mM NaCl solution. This mixture is placed into measuring PS sample cell by opening the cell area lid. cell is placed in to cell holder and thermal cap is placed on the cell. Cell area lid is closed and measurement is started. For each sample 3 measurements are done and an average result is reported.

The MFFTs (minimum film forming temperatures) are measured with the instrument RHOPOINT MFFT - 90. After reaching appropriate temperature, device gives a warning and the ready button is pressed on the touch screen. The polymer to be measured should be drawn as a film in a U shape from cold to hot with a 75 micron applicator. The point where the polymer film is formed shows the minimum film forming temperature.

Star like polymer morphology according to the present invention is a new way, a new technique that enables the polymer formulator to achieve a different, more advanced balance of performance particularly when it comes to modify the viscoelastic properties of a polymer composition without sacrificing room temperature film formation and surface properties. The emulsion polymer of the present invention does not contain any solvents and therefore it is environmentally friendly. Additionally, it is anionic and has an improved knot sealing when used as a coating in wood applications, preferably in pinewood.

Fig. shows the concept of the present invention.

The polymer of the present invention is used in a primer coating formulation for wood applications. It would be beneficial for wood coating applications where knot-sealing property is necessary. The product produced according to the method of the present invention exhibits good adhesion on different types of woods, certain sandability, suitable tanning blocking.

In an embodiment according to the present invention, the star-like polymer is a waterborne anionic polymer comprising 2-EHA/MMA/BA/MAA acrylic monomers in different ratios. Also, the polymer contains Diacetone acrylamide and Adipic acid dihydrazide as the crosslinker system which gives a strength on the structure of polymer film to cover and protect the surface. The system makes self-crosslinking at room temperature and contribute to preventing the leakage of the resin and tannins. In star-shape polymers of the present invention, the second phase (swellable/soluble outer layer) has high amount of acid which provides a linking of acid groups(-COOH) to wood substrate. So that, the polymer blocks the migration of extracts from wood and improves the knot-sealing capability.

### Knot Sealing Performance Tests

Pine knot panels with knots are coated by brush application. Before applications of primers, pine knot panels are sanded for making active the knots. After sanding, the knots are divided into two sides with masking tapes. Half of knots were painted with formulated dispersions from examples. The other half of the knots were painted with formulated conventional polymer. The formulated primers were applied by brush as two layers with a drying time of at least four hours between the applications. As the topcoat a white acrylic water borne trim paint was applied. The panels were dried for 7 days at room temperature. After curing, the panels are placed in a Q-UV accelerated weathering tester with UV-A radiation for 72 hours. Cycle: 72 hours 45°C UV-A. Panels are checked for knot bleeding after 72 hours.

The discoloration of the knots was determined by measuring the colour of the knots before and after the test and ΔE values describing the change of colour according to the CIE L*a*b*-system were calculated. The ΔE values reported are numeric average values of two different panels.

At the end of polymerization or during the formulation, post additives can be added to further enhance knot bleeding blocking for instance heavy metal complexes, water soluble polymers such as PvOH, polyamines, modified starches, polyamides, polyimines, polyimides, dihydrazides. Said post additives may also be used in order to improve adhesion on wood, tannin and stain blocking.

Various embodiments according to the present invention are explained below:
A multistage radical emulsion polymerization process for producing a knot sealing polymer dispersion of discrete particles dispersed in water, said process comprising the steps of;
polymerizing in a first stage a core of the discrete particles, as the main polymeric part comprising 0 to 4% by weight of one or more monoethylenically unsaturated monomers containing an acid functional group based on the total monomer composition of the main polymeric part, wherein the glass transition temperature (Tg) of the main polymeric part is at least 0°C,
polymerizing in a second stage a swellable/soluble outer layer as the second polymeric part comprising at least 7% by weight of one or more monoethylenically unsaturated monomers containing an acid functional group based on the total monomer composition of the swellable/soluble outer layer, wherein the glass transition temperature (Tg) of the second polymeric part is at least 20°C,
wherein the swellable/soluble outer polymeric layer is polymerized onto the surface of the main polymeric part and the amount of swellable/soluble outer layer represents between 10% to 50% by weight of the total polymeric composition and
adding a swelling agent selected from a base in sufficient amount as to raise the pH above 5 and bring the swellable/soluble outer layer (SOL) to the desired degree of swelling or dissolution, while the main particle remains substantially unaffected.

The process wherein the main polymeric part and/or the swellable/ soluble outer layer comprises one or more monomers containing moieties that can crosslink.

The process wherein the crosslinking is made by a reaction mechanism comprising one or more of dicarbonyl monomers and polyfunctional monomers.

The process wherein the swellable/soluble outer layer comprises at least 0.5% to 10% by weight of a monomer containing moieties that can crosslink, based on the total monomer composition of the swellable/soluble outer layer.

The process wherein the monomer of swellable/soluble outer layer and/or the main polymeric part that contains moieties that can crosslink is diacetone acrylamide monomer.

The process wherein the amount of swellable/soluble outer layer represents between 15% to 35% by weight of the total polymeric composition.

The process wherein the amount of swellable/soluble outer layer represents between 20% to 30% by weight of the total polymeric composition.

The process wherein the swellable/soluble outer layer is a polymer containing from 10% to 30% by weight of one or more mono- or di- carboxylic monomer, their anhydrides and their salts, based on the total monomer composition of the swellable/soluble outer layer.

The process wherein the carboxylic-functional monomer is selected from acrylic acid, methacrylic acid, itaconic acid, AMPS (2-akrilamido-2-metilpropansulfonic acid, vinylsulfonic acid, phosphate esters of polypropylene glycol monomethacrylate.

The process wherein the non-acid-functional monomers completing the swellable/soluble outer layer composition up to 100% by weight are selected from any monomer combination capable of copolymerizing with the carboxylic functional monomer(s).

The process wherein the one or more non-acid-functional monomer(s) completing the composition of the swellable/soluble outer layer are selected from the monomers comprising, styrene and alpha-methyl-styrene; vinyl acetate, vinyl propionate, vinyl chloride, veova-9 and 10, styrene, butyl acrylate, n-butyl methacrylate, methyl methacrylate, ethyl acrylate, 2-ethylhexyl acrylate, vinyl acetate and combinations thereof.

The process wherein up to 30% of the non-acid-functional monomer(s) are monomers of specific functionality capable of conferring or enhancing a specific property to the swellable/soluble outer layer and are selected from nitrogen-containing monomers, epoxy, hydroxy and carbonyl functional monomers, polyunsaturated monomers, dicarbonyl monomers, silane-functional and phosphatefunctional monomers.

The process wherein in the second stage, the one or more monoethylenically unsaturated monomers containing an acidic functional group is from 7.5% to 20% by weight based on the total monomer composition of the swellable/soluble outer layer polymerized in the second stage.

The process wherein in the second stage, the one or more monoethylenically unsaturated monomers containing an acidic functional group is at least 10% by weight based on the total monomer composition of the swellable/soluble outer layer polymerized in the second stage.

A polymer dispersion of discrete particles dispersed in water obtained by the process of the present invention.

Use of the polymer dispersion of the present invention as an indoor and outdoor coating composition for wood substrates or any wood based material in order to prevent knot bleeding.

## Claims

1. A multistage radical emulsion polymerization process for producing a knot sealing polymer dispersion of discrete particles dispersed in water, said process comprising the steps of;
polymerizing in a first stage a core of the discrete particles, as the main polymeric part comprising 0 to 4% by weight of one or more monoethylenically unsaturated monomers containing an acid functional group based on the total monomer composition of the main polymeric part, wherein the glass transition temperature (Tg) of the main polymeric part is at least 0°C,
polymerizing in a second stage a swellable/soluble outer layer as the second polymeric part comprising at least 7% by weight of one or more monoethylenically unsaturated monomers containing an acid functional group based on the total monomer composition of the swellable/soluble outer layer, wherein the glass transition temperature (Tg) of the second polymeric part is at least 20°C,
wherein the swellable/soluble outer polymeric layer is polymerized onto the surface of the main polymeric part and the amount of swellable/soluble outer layer represents between 10% to 50% by weight of the total polymeric composition and adding a swelling agent selected from a base in sufficient amount as to raise the pH above 5 and bring the swellable/soluble outer layer (SOL) to the desired degree of swelling or dissolution, while the main particle remains substantially unaffected.

2. The process according to claim 1 wherein the main polymeric part and/or the swellable/ soluble outer layer comprises one or more monomers containing moieties that can crosslink.

3. The process according to claim 2 wherein the crosslinking is made by a reaction mechanism comprising one or more of dicarbonyl monomers and polyfunctional monomers.

4. The process according to claims 1 to 3 wherein the swellable/soluble outer layer comprises at least 0.5% to 10% by weight of a monomer containing moieties that can crosslink, based on the total monomer composition of the swellable/soluble outer layer.

5. The process according to claims 1 to 4 wherein the monomer of swellable/soluble outer layer and/or the main polymeric part that contains moities that can crosslink is diacetone acrylamide monomer.

6. The process according to claims 1 to 5 wherein the amount of swellable/soluble outer layer represents between 15% to 35% by weight of the total polymeric composition.

7. The process according to claims 1 to 5 wherein the amount of swellable/soluble outer layer represents between 20% to 30% by weight of the total polymeric composition.

8. The process according to anyone of claims 1 to 7 wherein the swellable/soluble outer layer is a polymer containing from 10% to 30% by weight of one or more mono- or di- carboxylic monomer, their anhydrides and their salts, based on the total monomer composition of the swellable/soluble outer layer.

9. The process according to claims 1 to 8 wherein the carboxylic-functional monomer is selected from acrylic acid, methacrylic acid, itaconic acid, AMPS (2-akrilamido-2-metilpropansulfonic acid, vinylsulfonic acid, phosphate esters of polypropylene glycol monomethacrylate.

10. The process according to anyone of the preceding claims wherein the non-acid-functional monomers completing the swellable/soluble outer layer composition up to 100% by weight are selected from any monomer combination capable of copolymerizing with the carboxylic functional monomer(s), wherein the one or more non-acid-functional monomer(s) completing the composition of the swellable/soluble outer layer are selected from the monomers comprising, styrene and alpha-methyl-styrene; vinyl acetate, vinyl propionate, vinyl chloride, veova-9 and 10, styrene, butyl acrylate, n-butyl methacrylate, methyl methacrylate, ethyl acrylate, 2-ethylhexyl acrylate, vinyl acetate and combinations thereof.

11. The process according to claims 1 to 10 wherein up to 30% of the non-acid-functional monomer(s) are monomers of specific functionality capable of conferring or enhancing a specific property to the swellable/soluble outer layer and are selected from nitrogen-containing monomers, epoxy, hydroxy and carbonyl functional monomers, polyunsaturated monomers, dicarbonyl monomers, silane-functional and phosphatefunctional monomers.

12. The process according to anyone of claims 1 to 11 wherein in the second stage, the one or more monoethylenically unsaturated monomers containing an acidic functional group is from 7.5% to 20% by weight based on the total monomer composition of the swellable/soluble outer layer polymerized in the second stage.

13. The process according to anyone of claims 1 to 12 wherein in the second stage, the one or more monoethylenically unsaturated monomers containing an acidic functional group is at least 10% by weight based on the total monomer composition of the swellable/soluble outer layer polymerized in the second stage.

14. A polymer dispersion of discrete particles dispersed in water obtained by the process according to anyone of claims 1 to 13.

15. Use of the polymer dispersion of claim 14 as an indoor and outdoor coating composition for wood substrates or any wood based material in order to prevent knot bleeding.
